# EUROPEAN PATENT SPECIFICATION

(11) **EP 2 863 257 B1**
(45) Date of publication and mention of the grant of the patent: **17.06.2020**
(21) Application number: 14188810.7
(22) Date of filing: 14.10.2014
(51) Int. Cl.: G03B 17/08, H04N 7/18

(54) **Underwater images acquisition and processing system**
Unterwasserbildaufnahme- und verarbeitungssystem
Système d'acquisition et de traitement des images subaquatiques

(30) Priority: 15.10.2013 IT MI20131701
(43) Date of publication of application: 22.04.2015
(73) Proprietor: Consiglio Nazionale Delle Ricerche, 00185 Roma (IT); On Air S.r.l., 16129 Genova (IT)
(72) Inventor: Marini, Simone, 00185 ROMA (IT); Griffa, Annalisa, 00185 ROMA (IT); Aliani, Stefano, 00185 ROMA (IT); Conversi, Alessandra, 00185 ROMA (IT); Schroeder, Katrin, 00185 ROMA (IT); Borghini, Mireno, 00185 ROMA (IT)
(74) Representative: Maccalli, Marco

(56) References cited:
- US-A1- 2003 214 593
- US-A1- 2007 242 134
- US-A1- 2011 292 201
- PHOENIX X HUANG ET AL: "Underwater Live Fish Recognition Using a Balance-Guaranteed Optimized Tree", 5 November 2012 (2012-11-05), COMPUTER VISION ACCV 2012, SPRINGER BERLIN HEIDELBERG, BERLIN, HEIDELBERG, PAGE(S) 422 - 433, XP047026993, ISBN: 978-3-642-37330-5 * the whole document *
- CHARLES C ERIKSEN ET AL: "Seaglider: A Long-Range Autonomous Underwater Vehicle for Oceanographic Research", IEEE JOURNAL OF OCEANIC ENGINEERING, IEEE SERVICE CENTER, PISCATAWAY, NJ, US, vol. 26, no. 4, 1 October 2001 (2001-10-01), XP011042593, ISSN: 0364-9059
- DONGHWA LEE ET AL: "Vision-based object detection and tracking for autonomous navigation of underwater robots", OCEAN ENGINEERING, PERGAMON, AMSTERDAM, NL, vol. 48, 7 April 2012 (2012-04-07), pages 59-68, XP028487114, ISSN: 0029-8018, DOI: 10.1016/J.OCEANENG.2012.04.006 [retrieved on 2012-04-18]
- HORGAN J ET AL: "Review of Machine Vision Applications in Unmanned Underwater Vehicles", CONTROL, AUTOMATION, ROBOTICS AND VISION, 2006. ICARCV '06. 9TH INTERN ATIONAL CONFERENCE ON, IEEE, PI, 5 December 2006 (2006-12-05), pages 1-6, XP031334180, ISBN: 978-1-4244-0341-7

## Description

A solution according to embodiments of the present invention relates to monitoring systems of aquatic environments. In greater detail, a solution according to an embodiment of the present invention relates to a system for the acquisition and processing of underwater images.

The aquatic environment (i.e. internal to a mass of water), in particular the marine environment, is widely monitored for various purposes, for example for the monitoring of living beings (for example plankton, mucilage, fish), for the detection artefacts (submerged wrecks and/or ordnances) and for monitoring of marine geological structures (such as hydrothermal vents or to identify landslides).

A monitoring within a mass of water (for example, a lake, a sea or an ocean) appears to be more complex with respect to a monitoring in the atmosphere. A main difficulty in carrying out a monitoring of a mass of water resides in the imperviousness to electromagnetic radiation of the water mass. In fact, large-scale measures based on image acquisition from remote locations, such as a satellite detection, are possible only for a surface layer of the water mass, while investigating the most remote regions - i.e., located in depth with respect to a superficial level of the water mass, indicated as surface in the following - it is necessary to use *in situ* instrumentation, i.e. immersed in the water mass.

The use of optical sensors for the acquisition of images, especially in the visible spectrum of the water environment, has experienced wide spread as it is a means to document the aquatic environment by providing direct but not invasive measurements of the ecosystem.

In particular, monitoring systems of aquatic species also implement recognition systems thereof. For example, most of the known systems for monitoring the plankton are able to automatically identify plankton whose size is of the order of micrometers, based on digital images of the aquatic environment monitored.

Currently, the image acquisition is achieved primarily through the use of systems implemented in fixed platforms, vessels, Remotely Operated Vehicles (ROV) connected to support vessels. The use of other devices such as oceanographic drifter buoy, or Autonomous Underwater Vehicles (AUV), such as profiling floats and seagliders is known but not yet consolidated.

US 2009/0115844 describes an underwater camera that comprises an image acquisition unit and a detection of underwater conditions. A processor is used to store the underwater conditions in a memory together with an image acquired currently underwater.

The Applicants observe that the camera described in US 2009/0115844 is designed for use by a diver during a dive, and then not to operate autonomously even in aquatic environments whose conditions (for example the pressure of water and/or temperature) do not allow the presence of human beings, and not for prolonged periods of time also. The images are acquired directly by the scuba diver which operates the camera.

The international patent application WO 2013/116100 describes a camera system for capturing underwater panoramic images from a plurality of image acquisition points along a path and data indicating the orientation and the geographical position of the camera at the image acquisition point. The camera system may comprise a waterproof housing. The camera may also comprise a memory, for storing data, coupled with an image acquisition module, for acquiring the panoramic underwater views, a position sensor, for acquiring the positions of the image acquisition points, and an orientation sensor, for acquiring the orientation of panoramic underwater views in the positions of the image acquisition points.

The Applicants observe that the camera described in WO 2013/116100 is designed to capture underwater images of the aquatic environment near the surface under sufficient natural lighting condition, while it is unsuitable for the acquisition of images at greater depths and/or under poor lighting conditions. Furthermore, this camera is designed for use in boats with crew.

US 2011/292201 discloses an underwater scouting camera comprising: an outer cover, a door, a memory storage, a battery, and an internal housing which includes a flash, a shutter, a display frame, and a sonar sensor. When the sonar sensor emits a pulse in order to detect any fish, upon detection the flash and the shutter trigger to take a digital picture that may be saved on a memory device. After the picture is taken, the date and time appear on the display frame, and a notification is transmitted to a personal handheld device. The scouting camera allows a user to remotely track fish without having to continuously monitor the underwater scouting camera.

Phoenix X Huang; Bastiaan J Boom; Robert B Fisher: "Underwater Live Fish Recognition Using a Balance-Guaranteed Optimized Tree", Computer Vision ACCV 2012, 20121105 Springer Berlin Heidelberg, Berlin, Heidelberg - ISBN 978-3-642-37330-5 ; ISBN 3-642-37330-5, Vol:7724, Pages: 422 - 433 discloses a method to recognize fish in an unrestricted natural environment recorded by underwater cameras. This method extracts 66 types of features, which are a combination of color, shape and texture properties from di erent parts of the fish and reduce the feature dimensions with forward sequential feature selection (FSFS)procedure. The selected features of the FSFS are used by an SVM. We present a Balance-Guaranteed Optimized Tree (BGOT) to control the error accumulation in hierarchical classification and, therefore, achieve better performance. A BGOT of 10 fish species is automatically constructed using the inter-class similarities and a heuristic method. The proposed BGOT-based hierarchical classification method achieves about 4% better accuracy compared to state-of-the-art techniques on a live fish image dataset.

US 2003/214593 discloses a flash system for underwater photography includes a housing for containing a camera which may be a digital camera, a flash unit externally attached to this housing for emitting flash light, a light sensor on the housing for sensing reflected light and outputting detection signals according to the sensed reflected light, and a control signal generator inside the housing. The control signal generator includes an input device for allowing a user to specify a selected light quantity to be emitted from the flash unit and also serves to generate and output signals to the flash unit according to the detection signals from the light sensor and also the light quantity selected through the input device.

Charles C Eriksen; James Osse T; Russell D Light; Timothy Wen; Thomas W Lehman; Peter L Sabin; John W Ballard; Andrew M Chiodi: "Seaglider: A Long-Range Autonomous Underwater Vehicle for Oceanographic Research" IEEE Journal of Oceanic Eengineering, 2001 1001 IEEE Service Center, Piscataway, NJ, US - ISSN 0364-9059, Vol:26, Nr:4 discloses seagliders as small, reusable autonomous underwater vehicles designed to glide from the ocean surface to a programmed depth and back while measuring temperature, salinity, depth-averaged current, and other quantities along a sawtooth trajectory through the water. Their low hydrodynamic drag and wide pitch control range allows glide slopes in the range 0.2 to 3. They are designed for missions in range of several thousand kilometers and durations of many months. Seagliders are commanded remotely and report their measurements in near real time via wireless telemetry.

Donghwa Lee, Gonyop Kim, Donghoon Kim, Hyun Myung, Hyun-Taek Choi: "Vision-based object detection and tracking for autonomous navigation of underwater robots", Ocean Engineering, Pergamon, Amsterdam, NL, vol.48, 7 April 2012, pages 59-68 discloses an underwater robot using vision-based object detection and tracking techniques for navigation.

In general terms, the solution according to one or more embodiments of the present invention is based on the idea of providing a system for acquiring and processing images that can be simply coupled with a fixed platform and/or with an oceanographic device and capable of operate both independently from that fixed platform and/or oceanographic device, and to coordinate at least part of its operation with such fixed platforms and/or oceanographic device.

In particular, one or more aspects of the solution according to specific embodiments of the invention are set forth in the independent claims, with advantageous features thereof that are set forth in the dependent claims.

More specifically, an aspect of the solution according to an embodiment of the invention provides a system for acquiring and processing images of an aquatic environment is proposed. Said system is adapted to be coupled with a fixed platform or with an oceanographic device. The system comprises an acquisition module adapted to acquire at least one image of an aquatic environment to be monitored; a control module adapted to automatically control the operation of the system and process and store the at least one acquired image, a communication module adapted to transmit to receivers external to the system the at least one acquired image and/or data resulting from said processing of the at least one acquired image performed by the control module; a power supply module adapted to provide energy to the acquisition module, to the control module and to the communication module, and a casing adapted to house the acquisition module, the control module, the communication module and the power module, the casing being configured to maintain hermetically insulated the system for acquiring and processing of images from the aquatic environment. Moreover, the control module comprises a controller element configured to automatically control the acquisition of the at least one image by the acquisition module, and a processing element configured to process the at least one acquired image. In the solution according to an embodiment of the present invention the processing element is further configured to perform one or more algorithms adapted to perform a recognition of subjects in the at least one acquired image in order to identify at least one sought subject.

In one embodiment of the invention, wherein the at least one image comprises a plurality of images, the controller element being configured to determine a frequency of acquisition of the images of the plurality of images by the acquisition module, preferably on the basis of instructions provided during a programming phase of the system and/or according to a result of processing performed by the processing element of at least one image previously acquired.

In one embodiment of the invention, the control module further comprises a memory element configured to store the at least one image acquired by the acquisition module and/or data resulting from the processing performed by the processing element.

In one embodiment of the invention, the acquisition module comprises a photo/video-camera, and wherein the hermetic casing comprises a transparent element for enabling the photo/video-camera to perform the acquisition of the at least one image of the aquatic environment.

In one embodiment of the invention, the controller element is configured to select a focal point and/or a focal length of the photo/video-camera on the basis of characteristics of a subject to be identified system and on the basis of instructions provided during a programming phase of the system.

In one embodiment of the invention, the controller element is configured to maintain constant a focal point and/or a focal length of the photo/video-camera during an operation the system.

In one embodiment of the invention, the controller element is configured to adjust acquisition parameters of the photo/video-camera according to a result of processing performed by the processing element on at least one acquired image previously acquired.

In one embodiment of the invention, the acquisition module comprises a brightness detector adapted to measure a degree of brightness of the aquatic environment and a lighting assembly adapted to illuminate the aquatic environment, and wherein the controller element is preferably configured to: actuate the brightness detector before the acquisition of the at least one image to obtain the degree of brightness of the environment to be monitored and compare it with a threshold degree of brightness, and actuate the lighting assembly in case said degree of brightness is lower than said degree of brightness threshold.

In one embodiment of the invention, the controller element is configured to adjust acquisition parameters of the photo/video-camera on the basis of the degree of brightness detected by the brightness detector.

In one embodiment of the invention, the controller element is configured to adjust an aperture of the diaphragm and a focal distance of the photo/video-camera so as to adjust a depth of field of the acquired image.

In one embodiment of the invention, the processing element is further configured to provide, as data resulting from said processing of the at least one acquired image, data referred to at least one sought subject expressed through a plurality of strings of alphanumeric characters, and/or provide, as data resulting from said processing of the at least one acquired image, at least one relevant portion of the image, comprising at least one sought subject identified, extrapolated from the at least one acquired image.

In one embodiment of the invention, the communication module comprises one or more electronic components adapted to transmit radio-frequency signals in one or more frequency bands between 30KHz and 30GHz adapted to be received by appropriate receivers external to the system.

In one embodiment of the invention, the acquisition module comprises a depth detector connected to the controller element, the controller element being configured to actuate the communication module in correspondence of a detection provided by the depth detector of a position of the system on the surface of the aquatic environment.

In one embodiment of the invention, the controller element is configured to select between the transmission via radio-frequency signals of the at least one acquired image, of the at least one relevant portion of the image and/or of the plurality of strings of alphanumeric characters according to one or more frequency bands selected for the transmission via radio-frequency signals.

In one embodiment of the invention, the control module comprises a clock element connected to the controller element for providing a clock signal used as a time base, and wherein the controller element is configured to selectively enable an energy supply from the power module to the acquisition module, to the communication module, to the processor element, and to the memory element for a time period indicated by the instructions provided during a programming phase of the system determined by the clock signal provided by clock element, independently of an operation of the fixed platform or of the oceanographic device with which the system is coupled.

In one embodiment of the invention, the controller element is configured for commanding the supply module, the acquisition module, the communication module, the processor element, and/or the memory element in an energy saving condition when the controller element disables the energy supply from the power module toward them.

Another aspect of the present invention proposes an oceanographic device suitable for the use in a water environment for performing surveys of environmental parameters thereof comprising the system.

A solution according to one or more embodiments of the invention, as well as further features and the related advantages, will be better understood with reference to the following detailed description, given purely by way of non limitative example, to be read in conjunction with the accompanying figures (in which corresponding elements are indicated with the same or similar references and their explanation is not repeated for brevity). In this respect, it is expressly understood that the figures are not necessarily to scale (with some details that may be exaggerated and/or simplified) and that, unless otherwise indicated, they are simply used to conceptually illustrate the structures and procedures described. In particular:
**Figure 1** is a schematic representation of a system for acquiring and processing images according to an embodiment of the present invention;
**Figures 2A** - **2C** are a flow diagram of the operation of the system for acquiring and processing images according to an embodiment of the present invention;
**Figure 3** is a schematic representation of a system for acquiring and processing images, coupled with a fixed station according to an embodiment of the present invention, and
**Figures 4A** - **4C** are schematic representations of the system for acquiring and processing images coupled with oceanographic devices according to an embodiment of the present invention.

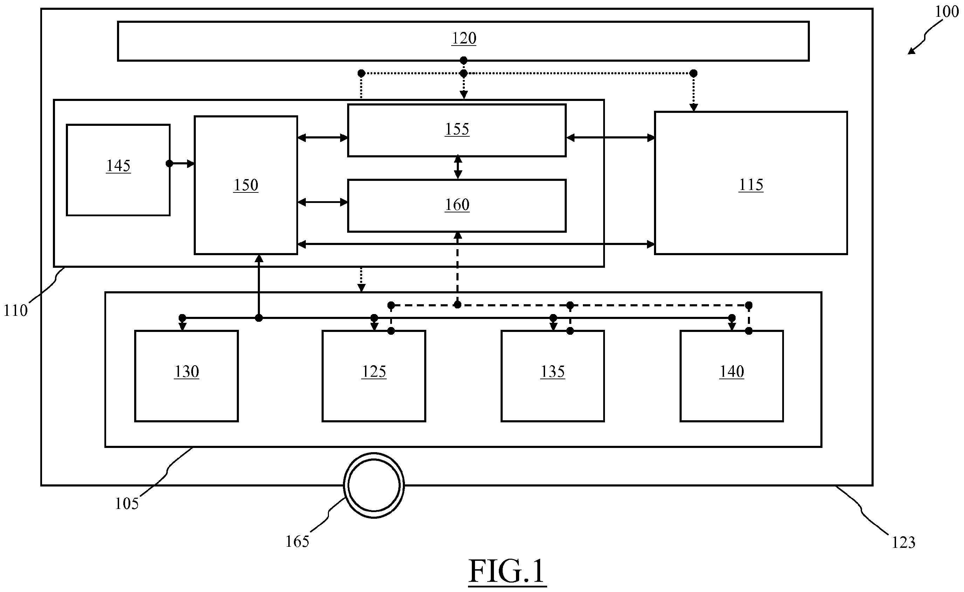

With reference to the figures, **Figure 1** is a schematic representation of a system for acquiring and processing images - referred to as system **100** in the following of the present description - according to an embodiment of the present invention.

The system **100** is designed to capture (digital) images, preferably at high-resolution, and process the acquired images, preferably by extracting information from acquired images and communicating (e.g. through radio or satellite transmissions) the extracted information and/or images, in a substantially automatically manner.

The system **100** comprises an acquisition module **105** adapted to acquire images and other possible measurements (for example, temperature, pressure/depth, etc. indications) and a control module **110** suitable for controlling the operations of the acquisition module **105,** for storing images and any other measurements and for performing a processing thereof.

The system **100** preferably also comprises a communication module **115** adapted to generate and send signals, such as radio frequency signals, possibly also satellite signals, and possibly adapted to receive and demodulate similar signals.

The system **100** also comprises a power module **120** connected to the other modules **105, 110** and **115** in such a way to provide them with (electrical) energy necessary for their operation.

Advantageously, the system **100** comprises a hermetic casing **123** adapted to contain in its interior (at least partially) the modules **105, 110, 115** and **120.**

In an alternative embodiment (not shown), the various modules of the system **100** may be enclosed in more than one watertight casing, for example, the power module **120** may be provided as an independent element from the remaining modules of the system **100;** for example, the power module **120** may be provided contained in a watertight casing that separated from the watertight casing that encloses the other modules of the system **100,** so as to be separated from the remaining modules **105, 110, 115** of the system **100,** and comprises connection elements for being connected (electrically and physically) to the remaining modules of the system **100.**

The acquisition module **105** comprises an images acquisition element, such as a camera and/or a camcorder, indicated generically as photo/video-camera **125** in the following, preferably adapted to capture digital images and, still more preferably adapted to vary acquisition parameters (for example, sensitivity and exposure duration). The acquisition module **105** further comprises a lighting assembly **130,** for example a plurality of LEDs (Light Emitting Diodes), a brightness detector **135** and a depth detector **140,** for example adapted to detect a pressure external to the system **100** (essentially a pressure exerted by the water column overlying the system **100)** to determine a depth reached by the system **100** in addition, the acquisition module **105** may comprise other elements for acquisition of environmental parameters (not shown), such as thermal and/or pressure sensors.

The acquisition module **105** is coupled with the power module **120** for receiving from the latter the (electrical) energy necessary for their operation, for example in the form of voltage and current provided at respective constant values.

The control module **110** comprises a clock **145** capable of generating a (electrical) periodic clock signal adapted to synchronize the operations of the system **100.** The clock **145** is connected to a controller element **150** to which provides the clock signal that the controller element **150** uses as a time base. The controller element **150** (for example, implemented by a hardware platform Arduino® or an equivalent electronic board comprising a microcontroller) is coupled with the elements **125, 130, 135,** and **140** comprised in the acquisition module **105** and to the communication module **115** for coordinating and managing them (as will be discussed in the following of the present description). The controller element **150** is also connected to a processor element **155** (e.g., a computer implemented on a single electronic board or single-board computer) of the control module **110** for coordinating and managing its operation.

The processor element **155** is adapted to implement algorithms (in the form of software, hardware and/or firmware), for example image processing algorithms. The processor element **155** is connected to a memory element **160** (e.g., a non-volatile flash type memory) comprised in the control module **110** and adapted to store the information acquired by the acquisition module **105** and the results of the elaboration of such information (for example, images and/or products of processing of images, as described below). Preferably, the memory element **160** is connected to the photo/video-camera **125** and, possibly, to detectors **135** and **140** (and/or possible other detectors comprised in the acquisition module **105)** for receiving and storing data acquired directly by the same. In one embodiment of the present invention, the processor element **155** is connected to the communication module **115** in order to transfer the acquired data to be transmitted therethrough.

The clock **145,** the controller element **150** and the processor element **155** are coupled with the power module **120** for receiving the (electric) energy necessary for their operation.

The communication module **115** comprises the necessary components (not shown in the figures) to perform transmissions (and possibly reception) of data via radio frequency signals (e.g., transmissions in one or more frequency bands between 30KHz and 30GHz) adapted to be received by suitable receivers external to the system **100.** Alternatively or in addition, the communication module may comprise components necessary to perform wired communications; for example, the communication module **115** may be equipped with a circuitry adapted to perform wired communications, for example according to the standard USB (Universal Serial Bus) and/or fiber optic communications. Eventually, the communication module may comprise a geo-positioning element, i.e. adapted to determine a geographic location of the system **100** (e.g., a GPS - Global Positioning System - element).

The power module **120** comprises electrical circuits (for example, charge pumps, switching power supplies or SMPS - Switching Mode Power Supply, rectifiers, etc.; not illustrated in the figures) designed to adapt the voltage and current supplied from a source of energy (electric, not shown in the figures). The energy source may be disposed within the system **100,** for example in the form of a battery pack (not shown) comprised in the power module **120,** or may be external to the system **100** (e.g., a battery pack or an external power supply network; not shown) and coupled with the power module **120** via a connecting element (for example, an electric cable - not shown).

The casing **123** is dimensioned to hold the modules **105, 110, 115** and **120** in a watertight manner. In other words, the casing insulates the modules **105, 110, 115** and **120** from the aquatic environment in which the system **100** is intended to be immersed; in particular, the housing **123** prevents a contact between water and the modules **105, 110, 115** and **120** for avoiding a possible damaging thereof. The casing **123** is also designed to withstand (i.e., does not undergo substantial deformation or cracks) to a maximum pressure applied determined according to a maximum depth relative to the surface of the water mass in which the system **100** is disposed (or can achieve) during its use. Preferably, the casing **123** has a form adapted to offer a minimum resistance to the fluid in which it is immersed; for example, the casing **123** comprises rounded walls and/or has a tapered shape.

In addition, the casing **123** comprises a transparent element, for example a porthole, **165** to allow the photo/video-camera **125** performing the acquisition of images of the aquatic environment. The photo/video-camera **125** is disposed in the casing **123** so that a lens (not shown) thereof is aligned with the porthole **165** (e.g. by aligning the centers of the porthole **165** and of the lens of the camera **125).** Preferably, a focal point of the photo/video-camera **125** and/or a focal length (or zoom) are set on the basis of a subject to be identified (for example, according to size and density of such a subject) and kept constant during operation system **100** (in order to eliminate an energy consumption of the photo/video-camera **125** associated with the movement of its optical focusing portions).

Advantageously, the lighting assembly **130** is disposed at a periphery of the porthole **165** or the casing **123** comprises one or more windows disposed in the vicinity of the porthole **165** through which the illumination assembly **130** may radiate light in the surrounding aquatic environment; as a further alternative, an illuminating portion (for example a plurality of clear caps of corresponding LEDs) of the lighting assembly **130** is exposed on an outer wall of the housing **123** in proximity of the porthole **165.** In cases just described, the provision of the lighting assembly **130** allows illuminating a region of the aquatic environment surrounding the porthole **165** - and thus that can be framed by the photo/video-camera **125** - having a radius proportional to the light intensity emitted from the lighting assembly (for allowing capturing images even under insufficient natural lighting conditions).

Advantageously, the housing **123** may be equipped with one or more pass-through openings (not shown in the figures). Through these openings elements as probes (not shown) of appropriate sensors comprised in the acquisition module **105** and/or one or more antennas (not shown) of the communication module **115** may be exposed on, or extend into the environment external to the casing **123.** Preferably, the openings are provided with seals and/or other sealing elements (not shown) adapted to ensure a hermetic seal of the casing **123** at the maximum pressure (ensuring the safety of the modules **105, 110, 115** and **120** enclosed in the casing **123).**

As a further addition, the casing **123** may be provided with one or more doors (not shown) adapted to selectively allow accessing respective connector elements (not shown). These connectors allow connecting in a wired manner the modules **105, 110, 115** and **120** with elements external to the system **100.** For example, the casing **123** may comprise a door to selectively allow access to a USB connector or an optical connector of the communication module **115,** a door for selectively allow access to a power connector of the power supply module **120** (for receiving energy from an external element thereto) and/or a door to selectively allow access to a data connector of the controller element **150,** processor element **155** and/or memory element **160** (for allowing direct access to these elements). Also the doors just described are designed in such a way to ensure a hermetic insulation of the modules **105, 110, 115** and **120** at the maximum pressure.

Having described the structure of the system **100,** an operation thereof according to an embodiment of the present invention will now be described.

The system **100** operates according to a set of instructions provided to the controller element **150** in a programming phase of the system **100** (for example, before being associated with a fixed observation post or an underwater vehicle); for example, recorded on a instruction memory of the controller element **150** and/or in the memory **160** of the system **100.** The controller element **150** substantially controls operations of the elements of the system **100** on the basis of these instructions and on the indication of time obtained by the clock signal (for example, by the alternation of the wave fronts of the clock signal) provided by the clock **145** of the control module **110.**

The controller element **150** manages the supply of (electric) energy from the power module **120** to the elements coupled therewith. In particular, the controller element **150** determines the activation of the elements of the modules **105, 110** and **115** for a period of time indicated by the instructions provided or from a completion of an operation and determined, for example, by a count of wave fronts of the clock signal of the clock element **145** and/or end of operation signals. Preferably, the controller element **150** deactivates the elements of the system **100** that are not necessary for performing an operation in progress, in order to reduce a power consumption of the system **100** as a whole. The elements of the system **100** not needed may be turned off (interrupting their connection with the power supply module **120)** or may be switched to a energy-saving condition (also referred to as stand-by).

The controller element **150** also determines an acquisition frequency of images by the photo/video-camera **125** (and acquisition frequencies of environmental parameters by any other sensors) for example, on the basis of instructions and/or upon detection of a particular event. For example, the acquisition frequency may be defined in the instructions provided according to speed of streams of the aquatic environment to which the system **100** will be subject and/or may be adjusted (increased or decreased) based on the identification or on the absence of identification, operated by the processor element **155,** of a sought subject, namely by the result of the processing of one or more images previously acquired by the processor element **155.**

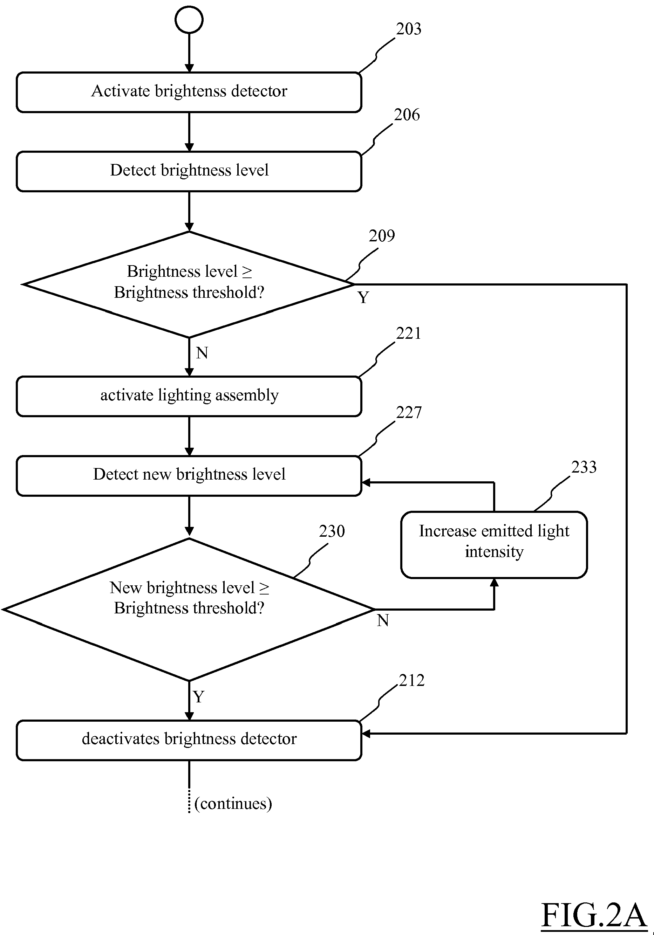

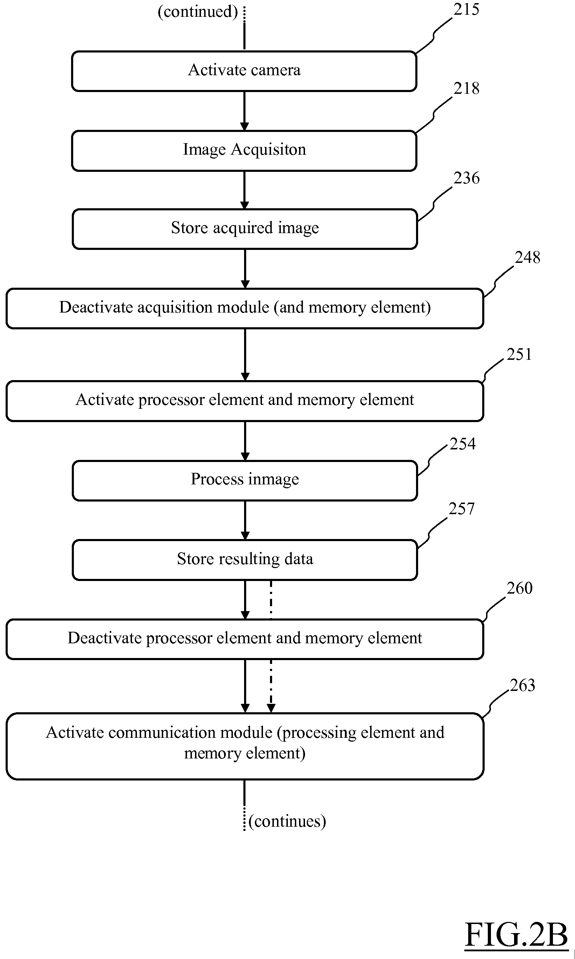

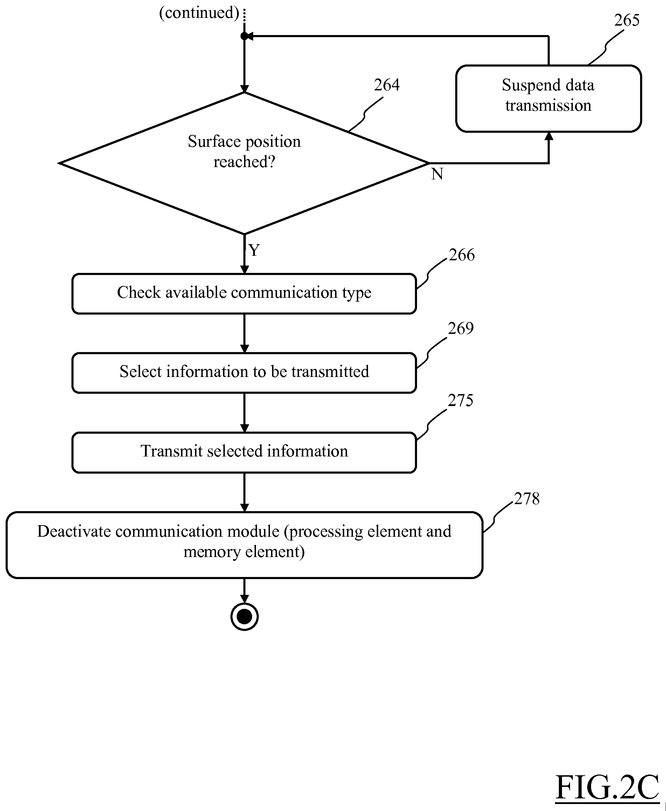

Considering now **Figures 2A** - **2C****,** which are a flowchart of operations performed by the system **100,** initially, an acquisition of images is executed. The acquisition of an image begins with the controller element **150** that activates (step **203)** - i.e., enables the supply of energy and provides a start signal to - the brightness detector **135** to detect (step **206)** a brightness level of the aquatic environment (surrounding the porthole **165)** to portray in the digital image. The brightness level is supplied to the controller element **150** which compares it (step **209)** with a brightness threshold (for example, defined in the instructions provided to the controller element **150** and/or calculated based on a light sensitivity of the photo/video-camera **125).**

If the degree of brightness detected is above the brightness threshold, the controller element **150** deactivates (step **212)** the brightness detector **135** and activates (step **215)** the photo/video camera **125** for performing the acquisition of the digital image (step **218).** Preferably, the controller element **150** is configured to adjust the acquisition parameters of the photo/video-camera **125** on the basis of the degree of brightness detected by the brightness detector **135** before proceeding with the acquisition of the image to obtain an optimal acquired image. For example, the controller element **150** may be configured to adjust the acquisition parameters of the photo/video-camera **125** such as an exposure time (i.e. opening time of the diaphragm), and/or an aperture (opening) of the diaphragm and/or a light sensitivity (in terms of ISO, ASA, and/o Din) according to the degree of brightness detected. In an alternative embodiment of the present invention, the controller element **150** may be configured to also adjust the focal point and/or the focal distance; particularly, the controller element **150** may be configured to adjust the aperture of the diaphragm and the focal distance so as to adjust a depth of field of the photo/video-camera **125.**

In the negative case, i.e. if the degree of brightness detected is below the brightness threshold, the controller element **150** activate (step **221)** the lighting assembly **130.** Preferably, the controller element **150** may control a light intensity provided by lighting assembly **130** comprising a minimum intensity and maximum intensity. For example, the controller element **150** may adjust an amount of energy supplied to the lighting assembly **130** from the power module **120** or adjusting a number of active light sources thereof (for example, a number of LEDs simultaneously lit).

After switching on the lighting assembly **130,** the brightness detector **135** detects (step **227)** a new brightness level. The new brightness level is compared (step **230)** with the brightness threshold by the controller element **150.** In case the new brightness level is greater than the brightness threshold, the controller element **150** operates as previously described, disabling (step **212**) the brightness detector **135** and activating (step **215)** the camera **125** to perform the image acquisition (step **218).**

In the negative case, the controller element **150** commands the lighting assembly **130,** an increase in the emitted light intensity (step **233).** Then, the operation proceeds iteratively as previously described with the controller element **150** which actuates the brightness detector **135** to evaluate the new brightness level and increases the light intensity emitted by the lighting assembly **130** (steps **227-233)** until the latter does allow detecting a detected brightness level above the brightness threshold, and then disable the brightness detector **135** and activate the photo/video-camera **125** for acquiring the digital image (steps **212-218).**

When the photo/video-camera **125** has acquired the digital image controller element **150** commands a storage thereof in the memory element **160;** alternatively, the acquired digital image is directly stored in the memory **160** (step **236)** without the need of a command from the controller element **150.**

In one embodiment of the present invention, other components, such as the depth detector **140,** may be actuated substantially in conjunction with the acquisition of the digital image and data detected by it may be stored in the memory element **160** and associated with such digital image. Examples of data that may be associated with acquired digital images comprise: an indication of acquisition date, and hour/minute (e.g. determined using the clock signal), an indication of a geographical direction (north, south, east, west, etc.) along which the digital image was acquired (for example, via a compass), a temperature of the aquatic environment and/or an indication of a geographical location in which the digital image was acquired (or geo-positioning). For example, the geographical indication may be obtained by the geo-positioning element comprised in the communication module that detects the position of the system **100** when the latter is on the surface. Upon completion of the acquisition of the digital image and its storing the controller element **150** may turn off (step **248)** the elements of the acquisition module **105** and (optionally) the memory element **160.**

In a preferred embodiment, the system **100** may be configured to perform a plurality (for example, a number defined by the instructions of the controller element **150)** of operations of digital image acquisition (steps **203-248),** each performed for acquiring a respective image, before proceeding with subsequent operations.

Subsequently, the controller element **150** may initiate a processing of the acquired digital image/s. In order to do so, the controller element **150** activate (step **251)** the memory element **160** (if disabled) and the processor element **155** which performs one or several processing (step **254)** on the acquired digital image/s.

Preferably, the processor element **155** may be configured to execute one or more algorithms (by means of a software preferably stored in the memory element **160** and/or firmware comprised in the processor element **155)** adapted to perform a recognition of objects on each digital image acquired in order to detect the presence of one or more subjects sought (such as aquatic organisms, wrecks, etc.). For example, the processor element **155** may implement one or more image processing algorithms (colour balance, contrast control, etc.) for qualitatively improving the pictorial content of the digital image acquired and subsequently implement one or more algorithms for the recognition the different occurrences of a particular subject (e.g., geological formation/event, living beings).

Recognition algorithms suitable for implementation in the processor element **155** of the system **100** may be based on computational methods useful for the definition of image recognition algorithms, for example: Viola, P., Jones, M., "Rapid object detection using a boosted cascade of simple features ", Computer Vision and Pattern Recognition, 2001, CVPR 2001 Proceedings of the 2001 IEEE Computer Society Conference, vol.1, pp.511-518, 2001; Koza, J.R. "Genetic Programming: On the Programming of Computers by Means of Natural Selection", MIT Press, Cambridge, MA, USA (1992); H. Zou, T. Hastie, "Regularization and variable selection via the elastic net" JR Statist. Soc. B, 67 (2) pp.301-320, 2005 and B.E. Boser, I. Guyon, and V. Vapnik "A training algorithm for optimal margin classifiers", Fifth Annual Workshop on Computational Learning Theory, pages 144-152 ACM, 1992.

The digital image processing provides as a result data referred to the object to be identified. For example, in the case where the processor element **155** is configured for detecting the presence of an animal species such as jellyfish, the resulting data stored in the memory element **160** may comprise the presence/absence of jellyfish, the number of specimens and/or the type of jellyfish identified in the captured images.

Advantageously, the processor element **155** is configured to express the resulting data using simple alphanumeric character strings and thus have very small dimensions (for example in the order of tens of thousands of bytes) with respect to acquired images, particularly if high resolution images, which have considerable size (in the order of hundreds of millions of bytes).

In addition or as an alternatively, the processor element **155** may be configured for extrapolating relevant image portions from digital images acquired. For example, the processor element **155,** for each individual or group of individuals (such as one or more living beings of a fish species sought or a specific geological conformation) recognized in an image, may be configured to extrapolate an image having a reduced size, for example limited to the subject or group of subjects recognized.

The processor element **155** moves (step **257)** the resulting data from processing in the memory **160** where they remain available. The controller element **150** may turn off (step **260),** the processor element **155** and the memory element **160** or keep them active for proceeding with a data transmission.

In a preferred embodiment of the present invention, the processor element **155** and the memory element **160** may be controlled by the controller element **150** to perform processing either simultaneously or in a sequential manner on more than one digital image previously acquired and stored in the memory element **160.** In this way, it is possible to reduce a number of activations of the processor element **155** and of the memory element **160** for obtaining a general reduction of energy consumption for the same digital images processed.

Furthermore, the processor element **155** and the memory element **160** may be controlled by the controller element **150** to perform comparison operations between two or more acquired images (for example, for identifying the detachment of material from a submerged slope, thus recognizing a landslide).

In an embodiment of the present invention, the controller element **150** is configured to adjust the acquisition parameters of the photo/video-camera **125** (i.e., the exposure time, the aperture of the diaphragm, the focal point and/or the focal distance) on the basis of the resulting data obtained from the processing of the acquired digital image/s in order to improve a quality of images acquired in the following (e.g., acquisition parameters may be adjusted on the basis of size of identified subjects in processed images in order to better isolate sought subjects from background in the following images acquired).

Subsequently, a data transmission operation may be implemented. The controller element **150** may activate (step **263),** the communication module **115,** the memory element **160** (if disabled) and the processor element **155** to perform the transmission of data to one or more receivers external to the system **100** (for example, a data collection station - not shown).

Advantageously, the system **100** verifies the possibility of a transmission, for example checking (step **264)** a position on the surface of the system **100** (i.e., with at least one or more antennas exposed to the atmosphere) via an activation of the depth detector **140** and an analysis of a depth indicated by it. In the negative case, the transmission operation is suspended (step **265)** and the checking (step **264)** via the depth detector **140** is repeated until it is detected the reaching of the surface position.

In the case where the surface position of the system **100** is confirmed, the controller element **150** proceeds actuating the transmission operation as follows.

Preferably, if the transmission module **115** comprises more than one transmission system, the amount (and type) of the data transmitted from the communication module **115** depend on the type of transmission used. Thus, the controller element **150** and/or processor element **155** are configured to check (step **266)** the type of data transmission available and select (step **269)** the transmission of the resulting data and/or acquired image associated therewith; for example, on the basis of energy and time needed to perform the transmission.

Advantageously, when the type of transmission used requires a significant amount of energy and/or time for the transmission of data (for example in the case of a satellite communication type) the system **100** may be configured to transmit only the data resulting from processing of the acquired image/s (such as alphanumeric strings constituting succinct report of the results of the processing of the acquired image). On the contrary, through a type of transmission less onerous in terms of energy required (for example, a broadcast in the VHF band) the system **100** may be configured to transmit acquired digital images or their portions extrapolated by the processor element **155** in addition to or alternatively to the resulting data. In this way, it is possible to communicate as much information as possible concerning the subject monitored by the system **100** while maintaining a low consumption of energy for performing the data transmission.

The resulting data, portions of images and/or the acquired image associated therewith are transmitted (step **275)** by the communication module **115.**

Advantageously, a number of acquired images, various groups of portions of the image and/or various groups of the resulting data associated therewith may be sent at the same time, for example encoded in a single radio frequency signal.

At the end of the transmission, the controller element **150** (step **278)** deactivates the communication module **115,** the memory element **160** and processor element **155.**

Optionally, once the transmission of the resulting data and/or acquired image associated therewith, the controller element **150** may be removed from the memory element **160** such resulting data and/or such acquired image, associated therewith, in order to contain an occupancy of available storage space of the memory element **160.**

In an alternative embodiment of the present invention, the communication module **115** may be omitted, the acquired images and the data resulting from the processing thereof may be obtained once the system is recovered (for example by removing the memory element **160** from the system and connecting it to a computer).

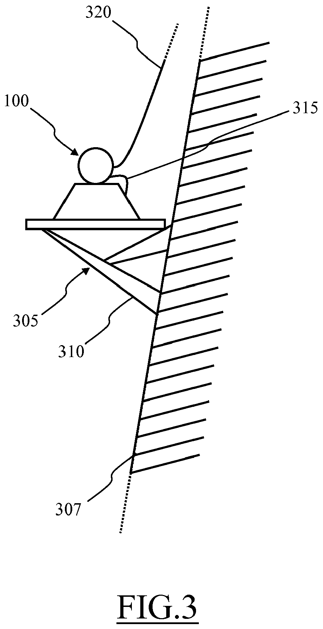

Turning now to **Figure 3****,** it is a schematic representation of the system **100** disposed on a fixed station **305** according to an embodiment of the present invention.

The fixed station **305** comprises a support assembly **310** fixed to a support element **307** (e.g., a natural structure such as a rock wall or artificial such as a pylon, a submerged mooring or a submerged wired station) and, optionally, one or more monitoring devices (not shown) adapted to carry out the acquisition of environmental parameters related to the aquatic environment (temperature, chemical composition of the water mass, etc.).

The assembly support **310** of the fixed location **305** may comprise servomechanisms to rotate the system **100** along one or more directions so as to allow the photo/video-camera **125** framing a region of the aquatic environment as large as possible.

Preferably, the system **100** disposed on the fixed station **305** receives the energy needed for its operation from a power supply system of the fixed station **305** (or from a base station not shown) by means of a power cord **315** connected to the power supply module **120** of the system **100;** for example, the power cord **315** is coupled with a connector normally hermetically insulated from a door (not shown). Alternatively, the power supply module **120** may be equipped with a battery pack or connected to an external battery pack (as described above)

In one embodiment of the present invention, the communication module **115** of the system **100** is connected by means of a cable **320** (also in this case coupled with a connector of the system **100)** to the base station (not shown) for transmitting the acquired images, portions of image and/or data resulting from processing thereof performed by the processor element **155** (for example, in real time).

In another embodiment of the present invention, the system **100** is equipped with a selective coupling assembly (not shown, for example, electromagnets or electromechanical clamps) through which it is coupled with the fixed station **305** in a releasable manner. The processor element **155** is configured to identify from the captured images, the occurrence of a relevant event (e.g., a volcanic eruption). The controller element **150** in its turn is configured to actuate the selective coupling assembly when the processor element **155** identifies the occurrence of the relevant event. In this way it is possible to ensure that the system reaches the surface for communicating information related to the occurrence of the event without suffering damage. Alternatively, the system **100** may be adapted to release only the control **110,** communication **115** and power **120** modules upon detection of an occurrence of the event.

The system **100** is also adapted to be arranged on a plurality of oceanographic devices adapted to aquatic environment, both for operation near the surface (for example drifter buoys) and for underwater operation (e.g. Autonomous Underwater Vehicles - AUV), which are particularly suitable for environmental monitoring over large areas and for extended periods (from weeks to years, however monitoring of shorter duration - in the order of hours - are not excluded). It is observed that the term oceanographic device does not circumscribe a sphere of use of such objects to oceanic water masses; also, these oceanographic devices may be used for surveys also in different aquatic environments, such as lakes, without requiring substantial modifications.

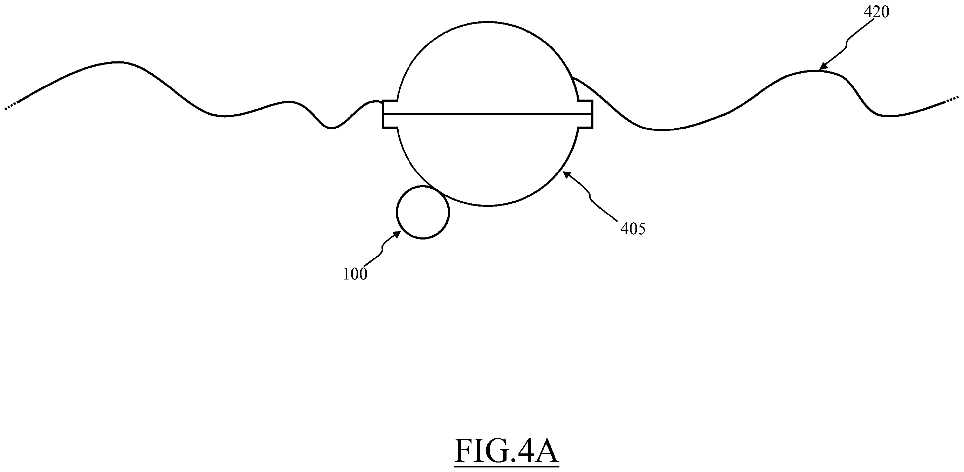

**Figures 4A** - **4C** illustrate examples of oceanographic devices with which the system **100** may be coupled: a drifter buoy **405,** a profiling float **410** and a seaglider **415,** respectively.

The drifter buoy **405** (shown in **Figure 4A****)** is a oceanographic device designed for floating on the surface **420** of the mass of water and for being transported by streams. Generally, the drifter buoy **405** comprises a shell, for example of a substantially spherical shape (although different shapes such as cylindrical or parallelepiped are not excluded), adapted to enclose at least one floating member (not shown, such as an air chamber) and tools for the acquisition of data relative to physical parameters (e.g., temperature and conductivity of the water) and/or biochemical (e.g. inorganic nutrients dissolved in water). Furthermore, the drifter buoy **405** comprises a positioning module, such as a GPS module, which allows a geo-positioning the data collected.

The drifter buoy **405** comprises a power supply element (e.g., a battery pack, not shown) designed for ensuring an operating time generally in the order of months.

During his operation (also referred to as mission in the following), the drifter buoy **405** remains floating on the surface of the water mass in which it is placed, moving drifted by streams of the water mass while acquires data and transmit them through a radio frequency communication module, for example via satellite.

The system **100** may be coupled with the drifter buoy **405** in a simply mechanical way, e.g. by coupling the casing **123** with an outer wall of the drifter buoy **405** via any method known in the art (for example, by welding or by using corresponding support and connection structures fixed to drifter buoy **405** and the casing **123** of the system **100).** In fact, the system **100** is adapted to operate the acquisition, processing and transmission of the acquired images and/or resulting data referred thereto in a completely independent way from the drifter buoy **405.**

Advantageously, the system **100** may be coupled with the drifter buoy **405** so that the system **100** is permanently in surface position (i.e., with at least one or more antennas of the communication module **115** exposed to the atmosphere). In this arrangement it is not necessary to configure the control element to check the position of the surface system **100** at the start of data transmission (i.e. the steps **264** and **265** may be omitted). In addition, in case the communication module **115** is equipped with a geo-positioning element it is possible to configure the controller element **150** in such a way that at every acquisition of a digital image a corresponding geographical location of the system **100** is detected and the latter is associated with the digital image acquired (thereby obtaining an accurate geo-positioning of scanned images).

In a different embodiment, the system **100** may be wired to the power supply element of the drifter buoy **405** (for example by means of an electrical cable, not shown, connected to a connector of the system **100)** for receiving energy therefrom.

In addition or alternatively, the system **100** may be connected to a control and storage element (not shown) of the drifter buoy **405** (e.g., via an electric cable connected to a connector associated with the control **110** or communication **115** module) for transmitting the scanned images, their portions and/or the resulting data referred thereto.

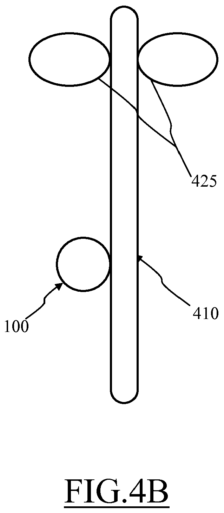

The profiling float **410** (shown in **Figure 4B****)** is an AUV designed to be transported by the streams of the water mass. The profiling float **410** is designed to alternate immersion phases, during which data relative to physical and biochemical parameters (as in the case of the drifter buoy **405)** by suitable detectors are acquired, and drift phases on the surface, during which the data acquired are transmitted to a base station (not shown).

The profiling float **410** usually comprises a shell of substantially cylindrical shape (although shells of other shapes are possible) in which are housed means for the acquisition of data (not shown), a positioning module (not shown), such as a GPS module (similarly to what described above with relation to the drifter buoy **405).** A supply element (not shown) ensure to the profiling float **410** an operating time preferably in the order of years.

In addition, the profiling float **410** comprises an immersion/emersion assembly (not shown), for example comprising inflatable floats **425** and a relative inflation/deflation assembly (not shown).

The system **100** may be coupled with the profiling float **410** in a simply mechanical manner, e.g. by coupling the casing **123** to an outer wall of the profiling float **410** by any method known in the art (again by welding or by a support and connection structures). Even in this case, the system **100** is adapted to operate the acquisition, processing and transmission of the acquired images and/or resulting data referred thereto in a completely independent way from the profiling float **410.**

In a similar way to that described above with respect the drifter buoy **405,** the system **100** may be connected to the supply element of the profiling float **410** (for example by means of an electric cable connected to a connector of the system **100)** for receiving energy therefrom and/or to a control and storage element (not shown) of the profiling float **410** (e.g., via an electric cable connected to a connector associated with the control **110** or the communication **115** module) for transmitting the captured images and/or resulting data referred thereto.

In this case, the check of the surface position ensures that the operation of data transmission performed by the communication module **115** is implemented by the controller element **150** of the control module **110** in correspondence of the drift phases on the surface. If the communication module **115** is equipped with geo-positioning element the controller element **150** may be configured to detect a geographical position system **100** once having detected the surface position thereof and then associate it with acquired images, their portions and/or the resulting data referred thereto to be transmitted (thereby obtaining a geo-positioning of acquired images).

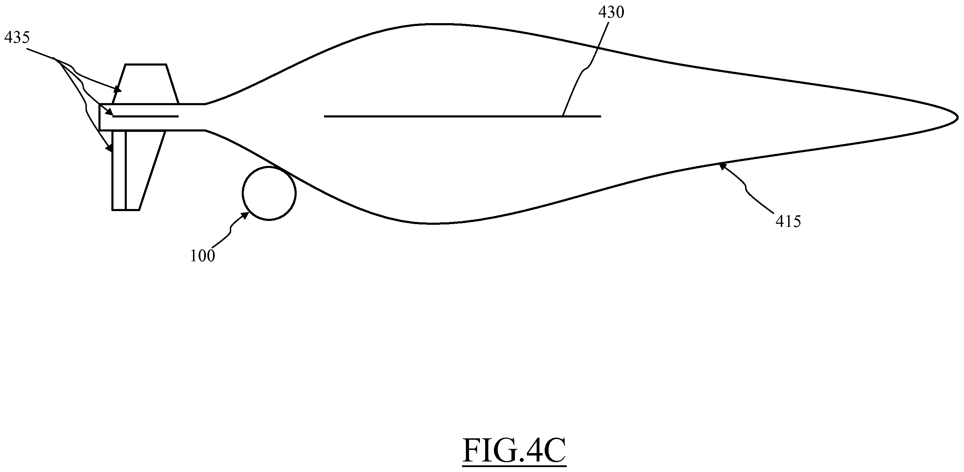

The seaglider **415** (shown in **Figure 4C****)** is an AUV designed to follow specific routes, for example preset, or to be driven in remote mode and is designed (similarly to the profiling float **410)** for alternating immersion phases during the which acquires data concerning the physical parameters, and sail phases on the surface, during which the acquired data are transmitted to the base station.

The seaglider **415** usually comprises a shell having a shape substantially tapered from which protrude navigation elements (ailerons, rudders, etc.). The seaglider **415** comprises wings **430** and (optionally) directional organs **435** protruding from a seaglider shell and a flotation and trim assembly (not visible in the figure) formed inside the shell. The seaglider **415** is able to move by actuating the flotation and trim assembly to make small changes of balance (for example, by means of the mobile masses comprised in the flotation and trim assembly), and buoyancy (for example, by varying an amount of liquid contained in ballast tanks comprised in the flotation and trim assembly) that are translated into movements thanks to the wings **420** and directional organs **425.**

Inside the shell are also housed instruments for the acquisition of data (not shown), a positioning module (not shown), such as a GPS module. A supply element (not shown) is also comprised in the shell and provides to the seaglider **415** an operating time in the order of weeks.

The system **100** may be coupled with the seaglider **415** in a simply mechanical manner, e.g. by coupling the casing **123** to an outer wall of the seaglider **415** via any method known in the art (also in this case, by welding or by support and connection structures). The system **100** is adapted to perform the acquisition, processing and transmission of the acquired images and/or resulting data referred thereto in a substantially independent manner from the seaglider **415.**

As in the case of vertical profiling float **410,** the system **100** checks the reaching of the surface position indicating the reaching of a sail phase on the surface before starting the data transmission operation. Also in this case it is possible to configure the system to obtain a geo-positioning of the acquired images, of their portions and/or of the resulting data referred thereto through a geo-positioning element during the sail phases on surface.

In an embodiment according to the present invention, the system **100** is connected to the control assembly of the seaglider **415** (for example, the control assembly is connected via a cable to a connector coupled with the control module **110** of the system **100).** Thanks to this connection the controller element **150** (appropriately configured) of the system **100** may control the seaglider **415.** For example, the controller element **150** of the system **100** may be configured for controlling (change) a route of the seaglider **415** in order to follow movements of a subject identified such as living beings (for example, a bank of jellyfish) identified by the processing of the processor element **155** on the acquired images from the chamber **125** of the acquisition module **105.**

The system **100** allows to widen the range of functionality of fixed platforms and/or oceanographic devices in a simple way, without the need to put through the latter to substantial changes (therefore, may be coupled with already existing fixed platforms and/or oceanographic devices). In particular, the use of the system **100** provides to the fixed platform or to the oceanographic devices with which is coupled the ability to capture images, perform processing thereof in order to obtain data related to one or more selected objects and transmit such images and/or data efficiently and independently from the operations normally carried out by the fixed platform or by the oceanographic devices.

The system **100** is suitable for very compact and light implementations, which have an extremely moderate impact on the floating and/or on the sailing of the oceanographic devices (in particular AUV) on which the system **100** is installed.

The system **100** is suitable for long lasting missions (for example, in the order of months or years), even when powered from a battery pack, thanks to the selective activation of the elements of system **100** (performed by the controller element **150)** that keeps a power consumption of the system **100** extremely low.

Finally, the system **100** thanks to its modular structure lends itself to various modifications and may be realized in a simple and cheap manner starting from general purpose electronic and electromechanical components.

## Claims

1. An oceanographic device **(405, 410, 415)** comprising a system **(100)** for acquiring and processing images of an aquatic environment, said system **(100),** the system comprising:
- an acquisition module **(105)** adapted to acquire images of an aquatic environment to be monitored;
- a control module **(110)** adapted to automatically control the operation of the system **(100)** and process and store the acquired images, the control module **(110)** comprising:
- a controller element **(150)** configured to automatically control the acquisition of the images by the acquisition module **(105);**
- a processing element **(155)** configured to be activated by the controller element for processing the acquired images by performing one or more algorithms adapted to perform a recognition of subjects in the acquired images in order to identify at least one sought subject;
- a communication module **(115)** adapted to transmit to receivers external to the system **(100)** the acquired images and/or data resulting from said processing of the acquired images performed by the control module **(110),** said communication module **(115)** comprising one or more electronic components adapted to transmit radio-frequency signals adapted to be received by appropriate receivers external to the oceanographic device;
- a power supply module **(120)** adapted to provide energy to the acquisition module **(105),** to the control module **(110)** and to the communication module **(115),** and
- a casing **(123)** adapted to house the acquisition module **(105),** the control module **(110),** the communication module **(115)** and the power module **(120),** the casing being configured to maintain hermetically insulated the system **(100)** for acquiring and processing of images from the aquatic environment, wherein:
the controller element **(150)** is configured to:
- activate the processing element **(155)** after the acquisition module has acquired a plurality of images of the aquatic environment to be monitored so as to cause the processing element to perform said processing on said plurality of acquired images;
- deactivate the processing element **(155)** after the processing element processed said plurality of images acquired by the acquisition module, and wherein:
- the acquisition module **(105)** comprises a depth detector **(140)** connected to the controller element **(150),** the controller element **(150)** being configured to actuate the communication module **(115)** in correspondence of a detection provided by the depth detector **(140)** of a position of the system **(100)** on the surface of the aquatic environment, and
- said oceanographic device **(405, 410, 415)** is a selected one among:
- a drifter buoy **(405);**
- a profiling float **(410);**
- a seaglider **(415).**

2. An oceanographic device **(405, 410, 415)** according to claim 1, wherein the controller element **(150)** is configured to determine a frequency of acquisition of the images of the plurality of images by the acquisition module **(105),** preferably on the basis of instructions provided during a programming phase of the system **(100)** and/or according to a result of processing performed by the processing element **(155)** of at least one image previously acquired.

3. An oceanographic device **(405, 410, 415)** according to any one of the preceding claims, wherein the control module **(110)** further comprises a memory element **(160)** configured to store the images acquired by the acquisition module **(105)** and/or data resulting from the processing performed by the processing element **(155).**

4. An oceanographic device **(405, 410, 415)** according to any one of the preceding claims, wherein the acquisition module **(105)** comprises a photo/video-camera **(125),** and wherein the hermetic casing **(123)** comprises a transparent element **(165)** for enabling the photo/video-camera **(125)** to perform the acquisition of the images of the aquatic environment.

5. An oceanographic device **(405, 410, 415)** according to claim 4, wherein the controller element **(150)** is configured to select a focal point and/or a focal length of the photo/video-camera **(125)** on the basis of characteristics of a subject to be identified and on the basis of instructions provided during a programming phase of the system **(100).**

6. An oceanographic device **(405, 410, 415)** according to claim 5, wherein the controller element **(150)** is configured to maintain constant a focal point and/or a focal length of the photo/video-camera **(125)** during an operation the system **(100).**

7. An oceanographic device **(405, 410, 415)** according to claim 4 or 5, wherein the controller element **(150)** is configured to adjust acquisition parameters of the photo/video-camera **(125)** according to a result of processing performed by the processing element **(155)** on acquired images previously acquired.

8. An oceanographic device **(405, 410, 415)** according to any one of the preceding claims 4 to 7, wherein the acquisition module **(105)** comprises a brightness detector **(135)** adapted to measure a brightness level of the aquatic environment and a lighting assembly **(130)** adapted to illuminate the aquatic environment, and wherein the controller element **(150)** is preferably configured to:
- actuate the brightness detector **(135)** before the acquisition of the images to obtain the brightness level of the environment to be monitored and compare it with a threshold brightness level, and
- actuate the lighting assembly **(130)** in case said brightness level is lower than said brightness level threshold.

9. An oceanographic device **(405, 410, 415)** according to claim 8, wherein the controller element **(150)** is configured to adjust acquisition parameters of the photo/video-camera **(125)** on the basis of the brightness level detected by the brightness detector **(135).**

10. An oceanographic device **(405, 410, 415)** according to claim 9, wherein the controller element **(150)** is configured to adjust an aperture of the diaphragm and a focal distance of the photo/video-camera **(125)** so as to adjust a depth of field of the photo/video-camera **(125).**

11. An oceanographic device **(405, 410, 415)** according to any one of the preceding claims, wherein the processing element **(155)** is further configured to:
- provide, as data resulting from said processing of the acquired images, data referred to at least one sought subject expressed through a plurality of strings of alphanumeric characters, and/or
- provide, as data resulting from said processing of the acquired images, at least one relevant portion of the image, comprising at least one sought subject identified, extrapolated from the at least one acquired image.

12. An oceanographic device **(405, 410, 415)** according to any one of the preceding claims, wherein said one or more electronic components comprised in the communication module (115) are adapted to transmit radio-frequency signals in one or more frequency bands between 30KHz and 30GHz.

13. An oceanographic device **(405, 410, 415)** according to any of claims 8, 9, 10, wherein said one or more electronic components comprised in the communication module **(115)** are adapted to transmit radio-frequency signals in one or more frequency bands between 30KHz and 30GHz.

14. An oceanographic device **(405, 410, 415)** according to claim 11 and any of claims 8, 9, 10, 13, wherein the controller element **(150)** is configured to select between the transmission via radio-frequency signals of the at least one acquired image, of the at least one relevant portion of the image and/or of the plurality of strings of alphanumeric characters according to one or more frequency bands selected for the transmission via radio-frequency signals.

## Patentansprüche

1. Eine ozeanographische Vorrichtung (405, 410, 415), die ein System (100) zum Akquirieren und Verarbeiten von Bildern einer aquatischen Umgebung aufweist, wobei das System (100) aufweist:
- ein Akquisemodul (105), das ausgebildet ist, um Bilder einer zu überwachenden aquatischen Umgebung zu akquirieren;
- ein Steuermodul (110), das ausgebildet ist, um den Betrieb des Systems (100) automatisch zu steuern und die akquirierten Bilder zu verarbeiten und zu speichern, wobei das Steuermodul (110) aufweist:
- ein Steuerelement (150), das konfiguriert ist, um die Akquise der Bilder durch das Akquisemodul (105) automatisch zu steuern;
- ein Verarbeitungselement (155), das konfiguriert ist, um durch das Steuerelement aktiviert zu werden, um die akquirierten Bilder zu verarbeiten, indem ein oder mehrere Algorithmen ausgeführt werden, die ausgebildet sind, um eine Erkennung von Subjekten in den akquirierten Bildern durchzuführen, um mindestens ein gesuchtes Subjekt zu identifizieren;
- ein Kommunikationsmodul (115), das ausgebildet ist, um die akquirierten Bilder und/oder Daten, die aus der durch das Steuermodul (110) durchgeführten Verarbeitung der akquirierten Bilder resultieren, zu Empfängern außerhalb des Systems (100) zu übertragen, wobei das Kommunikationsmodul (115) eine oder mehrere elektronische Komponenten aufweist, die ausgebildet sind, um Hochfrequenzsignale zu übertragen, die ausgebildet sind, um von geeigneten Empfängern außerhalb der ozeanografischen Vorrichtung empfangen zu werden;
- ein Stromversorgungsmodul (120), das ausgebildet ist, um dem Akquisemodul (105), dem Steuermodul (110) und dem Kommunikationsmodul (115) Energie bereitzustellen, und
- ein Gehäuse (123), das ausgebildet ist, um das Akquisemodul (105), das Steuermodul (110), das Kommunikationsmodul (115) und das Stromversorgungsmodul (120) aufzunehmen, wobei das Gehäuse konfiguriert ist, um das System (100) zur Akquise und Verarbeitung von Bildern aus der aquatischen Umgebung hermetisch isoliert zu halten, wobei:
das Steuerelement (150) konfiguriert ist, um:
- das Verarbeitungselement (155) zu aktivieren, nachdem das Akquisemodul eine Vielzahl von Bildern der zu überwachenden aquatischen Umgebung akquiriert hat, um zu bewirken, dass das Verarbeitungselement die Verarbeitung der Vielzahl von akquirierten Bildern durchführt;
- das Verarbeitungselement (155) zu deaktivieren, nachdem das Verarbeitungselement die durch das Akquisemodul akquirierten Vielzahl von Bildern verarbeitet hat, und wobei:
- das Akquisemodul (105) einen Tiefendetektor (140) aufweist, der mit dem Steuerelement (150) verbunden ist, wobei das Steuerelement (150) konfiguriert ist, um das Kommunikationsmodul (115) entsprechend einer von dem Tiefendetektor (140) gelieferten Erfassung einer Position des Systems (100) auf der Oberfläche der aquatischen Umgebung zu betätigen, und
- die ozeanographische Vorrichtung (405, 410, 415) eine Auswahl ist aus:
- einer Driftboje (405);
- einem Profilschwimmer (410);
- einem Seegleiter (415).

2. Eine ozeanographische Vorrichtung (405, 410, 415) nach Anspruch 1, wobei das Steuerelement (150) konfiguriert ist, um eine Häufigkeit der Akquise der Bilder der Vielzahl von Bildern durch das Akquisemodul (105) zu bestimmen, vorzugsweise auf der Grundlage von Anweisungen, die während einer Programmierphase des Systems (100) bereitgestellt werden, und/oder gemäß einem Verarbeitungsergebnis, das durch das Verarbeitungselement (155) an wenigstens einem zuvor akquirierten Bild erzielt wird.

3. Eine ozeanographische Vorrichtung (405, 410, 415) nach einem der vorhergehenden Ansprüche, wobei das Steuermodul (110) ferner ein Speicherelement (160) aufweist, das konfiguriert ist, um die durch das Akquisemodul (105) akquirierten Bilder und/oder Daten, die aus der durch das Verarbeitungselement (155) durchgeführten Verarbeitung resultieren, zu speichern.

4. Eine ozeanographische Vorrichtung (405, 410, 415) nach einem der vorhergehenden Ansprüche, wobei das Akquisemodul (105) eine Foto-/Videokamera (125) aufweist, und wobei das hermetische Gehäuse (123) ein transparentes Element (165) aufweist, um der Foto-/Videokamera (125) zu ermöglichen, die Akquise der Bilder der aquatischen Umgebung durchzuführen.

5. Eine ozeanographische Vorrichtung (405, 410, 415) nach Anspruch 4, wobei das Steuerelement (150) konfiguriert ist, um einen Brennpunkt und/oder eine Brennweite der Foto-/Videokamera (125) auf der Grundlage von Eigenschaften eines zu identifizierenden Subjekts und auf der Grundlage von Anweisungen, die während einer Programmierphase des Systems (100) bereitgestellt werden, auszuwählen.

6. Eine ozeanographische Vorrichtung (405, 410, 415) nach Anspruch 5, wobei das Steuerelement (150) konfiguriert ist, um einen Brennpunkt und/oder eine Brennweite der Foto/Videokamera (125) während eines Betriebs des Systems (100) konstant zu halten.

7. Eine ozeanographische Vorrichtung (405, 410, 415) nach Anspruch 4 oder 5, wobei das Steuerelement (150) konfiguriert ist, um Akquiseparameter der Foto-/Videokamera (125) gemäß einem Verarbeitungsergebnis, das durch das Verarbeitungselement (155) an zuvor akquirierten Bildern durchgeführt wird, einzustellen.

8. Eine ozeanographische Vorrichtung (405, 410, 415) nach einem der vorstehenden Ansprüche 4 bis 7, wobei das Erfassungsmodul (105) einen Helligkeitsdetektor (135) aufweist, der ausgebildet ist, um einen Helligkeitspegel der aquatischen Umgebung zu messen, und eine Beleuchtungseinheit (130), die ausgebildet ist, um die aquatische Umgebung zu beleuchten, und wobei das Steuerelement (150) vorzugsweise konfiguriert ist, um:
- den Helligkeitsdetektor (135) vor der Akquise der Bilder zu betätigen, um den Helligkeitspegel der zu überwachenden Umgebung zu erhalten und ihn mit einem Helligkeitsschwellenpegel zu vergleichen, und
- die Beleuchtungsanordnung (130) zu betätigen, sofern der besagte Helligkeitspegel niedriger als der besagte Helligkeitsschwellenpegel ist.

9. Eine ozeanographische Vorrichtung (405, 410, 415) nach Anspruch 8, wobei das Steuerelement (150) konfiguriert ist, um Akquiseparameter der Foto-/Videokamera (125) auf der Basis des durch den Helligkeitsdetektor (135) erfassten Helligkeitspegels einzustellen.

10. Eine ozeanographische Vorrichtung (405, 410, 415) nach Anspruch 9, wobei das Steuerelement (150) konfiguriert ist, um eine Apertur der Blende und eine Brennweite der Foto/Videokamera (125) einzustellen, um so eine Tiefenschärfe der Foto/Videokamera (125) einzustellen.

11. Eine ozeanographische Vorrichtung (405, 410, 415) nach einem der vorstehenden Ansprüche, wobei das Verarbeitungselement (155) weiter konfiguriert ist, um:
- Daten bereitzustellen, die sich auf mindestens einen gesuchten Gegenstand beziehen und durch eine Vielzahl von alphanumerischen Strings ausgedrückt werden, als Daten, die aus der Verarbeitung der erfassten Bilder resultieren, und/oder
- mindestens einen relevanten Teils des Bildes bereitzustellen, der mindestens ein gesuchtes identifiziertes Subjekt aufweist, das aus dem mindestens einen akquirierten Bild extrapoliert wurde, als Daten, die aus der Verarbeitung der akquirierten Bilder resultieren.

12. Eine ozeanographische Vorrichtung (405, 410, 415) nach einem der vorhergehenden Ansprüche, wobei die eine oder mehrere elektronische Komponenten, die das Kommunikationsmodul (115) aufweist, ausgebildet sind, um Hochfrequenzsignale in einem oder mehreren Frequenzbändern zwischen 30 kHz und 30 GHz zu übertragen.

13. Eine ozeanographische Vorrichtung (405, 410, 415) nach einem der Ansprüche 8, 9, 10, wobei die eine oder mehrere elektronische Komponenten, die das Kommunikationsmodul (115) aufweist, ausgebildet sind, um Hochfrequenzsignale in einem oder mehreren Frequenzbändern zwischen 30 kHz und 30 GHz zu übertragen.

14. Eine ozeanographische Vorrichtung (405, 410, 415) nach Anspruch 11 und nach einem der Ansprüche 8, 9, 10, 13, wobei das Steuerelement (150) konfiguriert ist, um zwischen der Übertragung über Hochfrequenzsignale des mindestens einen erfassten Bildes, des mindestens einen relevanten Teils des Bildes und/oder der Vielzahl von Strings aus alphanumerischen Zeichen entsprechend einem oder mehreren Frequenzbändern zu wählen, die für die Übertragung über Hochfrequenzsignale ausgewählt wurden.

## Revendications

1. Dispositif océanographique (405, 410, 415) comprenant un système (100) destiné à acquérir et à traiter des images d'un environnement aquatique, ledit système (100) comprenant :
- un module d'acquisition (105) adapté pour acquérir des images d'un environnement aquatique à surveiller ;
- un module de commande (110) adapté pour commander automatiquement le fonctionnement du système (100) et pour traiter et stocker les images acquises, le module de commande (110) comprenant :
- un élément contrôleur (150) configuré pour commander automatiquement l'acquisition des images par le module d'acquisition (105) ;
- un élément de traitement (155) configuré pour être activé par l'élément contrôleur pour traiter les images acquises en mettant en œuvre un ou plusieurs algorithmes adaptés pour mettre en œuvre une reconnaissance de objets dans les images acquises pour identifier au moins un objet recherché ;
- un module de communication (115) adapté pour transmettre à des récepteurs externes au système (100) les images acquises et/ou des données résultant dudit traitement des images acquises mis en œuvre par le module de commande (110), ledit module de communication (115) comprenant un ou plusieurs composants électroniques adaptés pour transmettre des signaux radiofréquences adaptés pour être reçus par des récepteurs appropriés externes au dispositif océanographique ;
- un module d'alimentation (120) adapté pour fournir de l'énergie au module d'acquisition (105), au module de commande (110) et au module de communication (115), et
- un boîtier (123) adapté pour loger le module d'acquisition (105), le module de commande (110), le module de communication (115) et le module d'alimentation (120), le boîtier étant configuré pour maintenir hermétiquement isolé le système (100) destiné à acquérir et à traiter des images à partir de l'environnement aquatique, dans lequel :
l'élément contrôleur (150) est configuré pour :
- activer l'élément de traitement (155) après que le module d'acquisition a acquis une pluralité d'images de l'environnement aquatique à surveiller de sorte à forcer l'élément de traitement à mettre en œuvre ledit traitement de ladite pluralité d'images acquises ;
- désactiver l'élément de traitement (155) après que l'élément de traitement a traité ladite pluralité d'images acquises par le module d'acquisition, et dans lequel :
- le module d'acquisition (105) comprend un détecteur de profondeur (140) connecté à l'élément contrôleur (150), l'élément contrôleur (150) étant configuré pour actionner le module de communication (115) en relation avec une détection fournie par le détecteur de profondeur (140) d'une position du système (100) sur la surface de l'environnement aquatique, et
- ledit dispositif océanographique (405, 410, 415) est un élément choisi parmi :
- une bouée dérivante (405) ;
- un flotteur - profileur (410) ;
- un aéroglisseur maritime (415).

2. Dispositif océanographique (405, 410, 415) selon la revendication 1, dans lequel l'élément contrôleur (150) est configuré pour déterminer une fréquence d'acquisition des images de la pluralité d'images par le module d'acquisition (105), de préférence sur la base des instructions fournies pendant une phase de programmation du système (100) et/ou en fonction d'un résultat d'un traitement mis en œuvre par l'élément de traitement (155) d'au moins une image précédemment acquise.

3. Dispositif océanographique (405, 410, 415) selon l'une quelconque des revendications précédentes, dans lequel le module de commande (110) comprend en outre un élément mémoire (160) configuré pour stocker les images acquises par le module d'acquisition (105) et/ou des données résultant du traitement mis en œuvre par l'élément de traitement (155).

4. Dispositif océanographique (405, 410, 415) selon l'une quelconque des revendications précédentes, dans lequel le module d'acquisition (105) comprend une caméra photo/vidéo (125), et dans lequel le boîtier hermétique (123) comprend un élément transparent (165) pour permettre à la caméra photo/vidéo (125) de mettre en œuvre l'acquisition des images de l'environnement aquatique.

5. Dispositif océanographique (405, 410, 415) selon la revendication 4, dans lequel l'élément contrôleur (150) est configuré pour sélectionner un point focal et/ou une longueur focale de la caméra photo/vidéo (125) sur la base de caractéristiques d'un objet à identifier et sur la base d'instructions fournies pendant une phase de programmation du système (100).

6. Dispositif océanographique (405, 410, 415) selon la revendication 5, dans lequel l'élément contrôleur (150) est configuré pour maintenir constant un point focal et/ou une longueur focale de la caméra photo/vidéo (125) pendant un fonctionnement du système (100).

7. Dispositif océanographique (405, 410, 415) selon la revendication 4 ou 5, dans lequel l'élément contrôleur (150) est configuré pour régler des paramètres d'acquisition de la caméra photo/vidéo (125) en fonction d'un résultat d'un traitement mis en œuvre par l'élément de traitement (155) sur des images précédemment acquises.

8. Dispositif océanographique (405, 410, 415) selon l'une quelconque des revendications 4 à 7, dans lequel le module d'acquisition (105) comprend un détecteur de luminosité (135) adapté pour mesurer un niveau de luminosité de l'environnement aquatique et un assemblage d'éclairage (130) adapté pour éclairer l'environnement aquatique, et dans lequel l'élément contrôleur (150) est de préférence configuré pour :
- actionner le détecteur de luminosité (135) avant l'acquisition des images pour obtenir un niveau de luminosité de l'environnement à surveiller et le comparer à un niveau de luminosité seuil, et
- actionner l'assemblage d'éclairage (130) dans le cas où ledit niveau de luminosité est inférieur audit seuil de niveau de luminosité.

9. Dispositif océanographique (405, 410, 415) selon la revendication 8, dans lequel l'élément contrôleur (150) est configuré pour régler des paramètres d'acquisition de la caméra photo/vidéo (125) sur la base du niveau de luminosité détecté par le détecteur de luminosité (135).

10. Dispositif océanographique (405, 410, 415) selon la revendication 9, dans lequel l'élément contrôleur (150) est configuré pour régler une ouverture du diaphragme et une distance focale de la caméra photo/vidéo (125) de sorte à régler une profondeur de champ de la caméra photo/vidéo (125).

11. Dispositif océanographique (405, 410, 415) selon l'une quelconque des revendications précédentes, dans lequel l'élément de traitement (155) est en outre configuré pour :
- fournir, en tant que données résultant dudit traitement des images acquises, des données concernant au moins un objet recherché exprimées par une pluralité de chaînes de caractères alphanumériques, et/ou
- fournir, en tant que données résultant dudit traitement des images acquises, au moins une partie appropriée de l'image, comprenant au moins un objet recherché identifié, extrapolé à partir de ladite au moins une image acquise.

12. Dispositif océanographique (405, 410, 415) selon l'une quelconque des revendications précédentes, dans lequel lesdits un ou plusieurs composants électroniques compris dans le module de communication (115) sont adaptés à transmettre des signaux radiofréquences dans une ou plusieurs bandes de fréquence entre 30 kHz et 30 GHz.

13. Dispositif océanographique (405, 410, 415) selon l'une quelconque des revendications 8, 9, 10, dans lequel lesdits un ou plusieurs composants électroniques compris dans le module de communication (115) sont adaptés pour transmettre des signaux radiofréquences dans une ou plusieurs bandes de fréquence entre 30 kHz et 30 GHz.

14. Dispositif océanographique (405, 410, 415) selon la revendication 11 et l'une quelconque des revendications 8, 9, 10, 13, dans lequel l'élément contrôleur (150) est configuré pour sélectionner entre la transmission via des signaux radiofréquences de ladite au moins une image acquise, de ladite au moins une partie appropriée de l'image et/ou de la pluralité de chaînes de caractères alphanumériques en fonction d'une ou de plusieurs bandes de fréquences choisies pour la transmission via des signaux radiofréquences.
